# EUROPEAN PATENT APPLICATION

(11) **EP 4 083 940 A1**
(43) Date of publication of application: **02.11.2022**
(21) Application number: 22170232.7
(22) Date of filing: 27.04.2022
(51) Int. Cl.: G06V 10/82, G06V 20/56

(54) **USE OF NEURAL NETWORKS TO PREDICT LANE LINE TYPES**

(30) Priority: 30.04.2021 US 202117245039
(71) Applicant: DUS Operating, Inc., Auburn Hills, MI 48326 (US)
(72) Inventor: GHAZI MANSOUR, Iyad Faisal, Auburn Hills, 48326 (US); UMAT, Akhil, Auburn Hills, 48326 (US)
(74) Representative: Neumann Müller Oberwalleney Patentanwälte PartG mbB

(57) **Abstract**

A method of predicting lane line types with neural networks includes capturing optical information with one or more optical sensors disposed on a vehicle. The method further includes cropping the optical information to a predetermined size, passing cropped optical information through a neural network, and assessing the optical information to detect locations of a plurality of lane lines in the optical information. The method further includes predicting a plurality of values assigned to predetermined lane line types of the plurality of lane lines. The method further determines a maximum confidence value for each of the plurality of values assigned to the predetermined lane line types for each of the plurality of lane lines; and extracts a lane line label corresponding to the maximum confidence value for each of the plurality of lane lines.

## Description

### FIELD

The present disclosure is directed to a system and method of using neural networks to predict the types of various lane lines on a road surface.

### BRIEF DESCRIPTION

The statements in this section merely provide background information related to the present disclosure and may or may not constitute prior art.

Vehicle technologies such as free-ranging on grid navigation, as well as parking guidance and information systems, aid in the prevention of human error when drivers operate a vehicle. Such technologies have been used to improve navigation of roadways, and to augment the parking abilities of vehicle drivers while the drivers are present within the vehicle. For example, on-board detection systems and impact alert systems have been developed that assist the operator of the vehicle while maneuvering to avoid collisions. Typical on-board detection systems utilize machine vision for determining or predicting the surroundings of the vehicle. The detection systems often rely upon cameras, and/or other optical sensors to predict lane lines, lane types, and in order to aid autonomous driving systems of the vehicle. More specifically, the detection systems provide data for autonomous driving systems to autonomously detect and avoid obstacles and avoiding collisions while driving. Some autonomous driving systems have even been adapted to autonomously park the vehicle in a parking spot once the operator of the vehicle has positioned the vehicle in a predefined location proximate the parking spot.

While these systems and methods are useful for their intended purpose, typical detection systems are subject to optical interference caused by weather, debris, and the like. Accordingly, there is a need in the art for new and improved vehicle technologies that are robust in predicting both lane lines and lane types even when the road surface is obscured by weather, debris, and the like.

### SUMMARY

According to several aspects of the present disclosure a method of predicting lane line types with neural networks includes capturing optical information with one or more optical sensors disposed on a vehicle. The method further includes cropping the optical information to a predetermined size, passing cropped optical information through a neural network, and assessing the optical information to detect locations of a plurality of lane lines in the optical information. The method further includes predicting a plurality of values assigned to predetermined lane line types of the plurality of lane lines. The method further determines a maximum confidence value for each of the plurality of values assigned to the predetermined lane line types for each of the plurality of lane lines; and extracts a lane line label corresponding to the maximum confidence value for each of the plurality of lane lines.

In another aspect of the present disclosure capturing optical information further includes utilizing at least one forward-facing camera disposed on the vehicle to capture the optical information in a predetermined field of view in front of the vehicle.

In yet another aspect of the present disclosure cropping the optical information further includes receiving uncropped optical information from the one or more optical sensors, and reducing a size of the optical information by retaining only a portion of the optical information containing a road surface.

In yet another aspect of the present disclosure passing cropped optical information through a neural network further includes normalizing pixel values within the cropped optical information, and passing the cropped optical information through four convolutional layers. The cropped optical information is passed through three fully connected layers.

In yet another aspect of the present disclosure passing the cropped optical information through four convolutional layers further includes repeatedly reducing a size of the cropped optical information by filtering the optical information in each of the four convolutional layers, and pooling the optical information after each recursive size reduction of the cropped optical information.

In yet another aspect of the present disclosure passing the cropped optical information through three fully connected layers further includes mapping extracted features of the cropped optical information to the plurality of values assigned to predetermined lane line types.

In yet another aspect of the present disclosure assessing the optical information to detect locations of a plurality of lane lines in the optical information further includes assigning a left designation to a lane line immediately to a left of the vehicle. A left-left designation is assigned to a lane line displaced by a first predetermined distance directionally left of the lane line immediately to the left of the vehicle. A right designation is assigned to a lane line immediately to a right of the vehicle. A right-right designation is assigned to a lane line displaced by a second predetermined distance directionally right of the lane line immediately to the right of the vehicle. The first and second predetermined distances are substantially equal and each defines a width of a lane.

In yet another aspect of the present disclosure predicting a plurality of values assigned to predetermined lane line types of the plurality of lane lines further includes predicting at least ten values for each of the plurality of lane lines. The ten values correspond to at least ten predetermined lane line types.

In yet another aspect of the present disclosure determining a maximum confidence value for each of the plurality of values assigned to the predetermined lane line types for each of the plurality of lane lines further includes determining which of the at least ten values assigned to the plurality of lane lines has a highest numerical confidence value. The highest numerical confidence value is a highest probability of each of the lane lines being a specific one of the predetermined lane line types.

In yet another aspect of the present disclosure extracting a lane line label corresponding to the maximum confidence value for each of the plurality of lane lines further includes assigning a lane line label to each of the plurality of lane lines. The lane line labels include one or more of: a nonexistent lane line, an unknown lane line, a dashed first color lane line, a solid first color lane line, a dashed second color lane line, a solid second color lane line, a dashed second color and solid second color lane line, a solid second color and dashed second color lane line, a double solid second color lane line, and an emergency lane line. The second color is different from the first color.

In yet another dependent or independent aspect of the present disclosure a method of predicting lane line types with neural networks includes utilizing at least one forward-facing camera disposed on the vehicle to capture optical information in a predetermined field of view in front of the vehicle and receiving uncropped optical information from the one or more optical sensors. The method further includes cropping the optical information to a predetermined size by reducing a size of the optical information through retaining only a portion of the optical information containing a road surface. The method further includes passing cropped optical information through a neural network and assessing the optical information to detect locations of a plurality of lane lines in the optical information. The method further includes predicting a plurality of values assigned to predetermined lane line types of the plurality of lane lines and determining a maximum confidence value for each of the plurality of values assigned to the predetermined lane line types for each of the plurality of lane lines. The method further includes extracting a lane line label corresponding to the maximum confidence value for each of the plurality of lane lines.

In yet another aspect of the present disclosure, in particular of the independent method aspect, utilizing at least one forward-facing camera disposed on the vehicle to capture optical information in a predetermined field of view in front of the vehicle further includes capturing optical information in a 180° arc in front of the vehicle and for at least 100 meters in front of the vehicle.

In yet another aspect of the present disclosure, in particular of the independent method aspect, passing cropped optical information through a neural network further includes normalizing pixel values within the cropped optical information. Passing cropped optical information further includes passing the cropped optical information through four convolutional layers, and passing the cropped optical information through three fully connected layers.

In yet another aspect of the present disclosure, in particular of the independent method aspect, passing the cropped optical information through four convolutional layers further includes repeatedly reducing a size of the cropped optical information by filtering the optical information in each of the four convolutional layers, and pooling the optical information after each recursive size reduction of the cropped optical information.

In yet another aspect of the present disclosure, in particular of the independent method aspect, passing the cropped optical information through three fully connected layers further mapping extracted features of the cropped optical information to the plurality of values assigned to predetermined lane line types.

In yet another aspect of the present disclosure, in particular of the independent method aspect, assessing the optical information to detect locations of a plurality of lane lines in the optical information further includes assigning a left designation to a lane line immediately to a left of the vehicle. A left-left designation is assigned to a lane line displaced by a first predetermined distance directionally left of the lane line immediately to the left of the vehicle. A right designation is assigned to a lane line immediately to a right of the vehicle. A right-right designation is assigned to a lane line displaced by a second predetermined distance directionally right of the lane line immediately to the right of the vehicle. The first and second predetermined distances are substantially equal and each defines a width of a lane.

In yet another aspect of the present disclosure, in particular of the independent method aspect, predicting a plurality of values assigned to predetermined lane line types of the plurality of lane lines further includes predicting at least ten values for each of the plurality of lane lines, wherein the ten values correspond to at least ten predetermined lane line types.

In yet another aspect of the present disclosure, in particular of the independent method aspect, determining a maximum confidence value for each of the plurality of values assigned to the predetermined lane line types for each of the plurality of lane lines further includes determining which of the at least ten values assigned to the plurality of lane lines has a highest numerical confidence value. The highest numerical confidence value is a highest probability of each of the lane lines being a specific one of the predetermined lane line types.

In yet another aspect of the present disclosure, in particular of the independent method aspect, extracting a lane line label corresponding to the maximum confidence value for each of the plurality of lane lines further includes assigning a lane line label to each of the plurality of lane lines. The lane line labels include one or more of: a nonexistent lane line, an unknown lane line, a dashed first color lane line, a solid first color lane line, a dashed second color lane line, a solid second color lane line, a dashed second color and solid second color lane line, a solid second color and dashed second color lane line, a double solid second color lane line, and an emergency lane line. The second color is different from the first color.

In yet another aspect of the present disclosure a system for predicting lane line types with neural networks includes a vehicle having at least one forward-facing camera disposed on the vehicle, the at least one forward-facing camera capturing optical information in a predetermined field of view in front of the vehicle. The system further includes a control module disposed within the vehicle and having a processor, a memory, and one or more input/output (I/O) ports; the I/O ports receiving input data from the at least one forward-facing camera. The processor executes programmatic control logic stored within the memory. The programmatic control logic includes a first control logic receiving uncropped optical information from the one or more optical sensors. A second control logic crops the optical information to a predetermined size by reducing a size of the optical information through retaining only a portion of the optical information containing a road surface. A third control logic passes cropped optical information through a neural network including four convolutional layers and three fully connected layers. A fourth control logic repeatedly reduces a size of the cropped optical information by filtering the optical information in each of the four convolutional layers. A fifth control logic pools the optical information after each successive size reduction of the cropped optical information. A sixth control logic maps extracted features of the cropped optical information to the plurality of values assigned to predetermined lane line types in each of the three fully connected layers. A seventh control logic assesses the optical information to detect locations of a plurality of lane lines in the optical information. An eighth control logic predicts a plurality of values assigned to predetermined lane line types of the plurality of lane lines. A ninth control logic determines a maximum confidence value for each of the plurality of values assigned to the predetermined lane line types for each of the plurality of lane lines. A tenth control logic extracts a lane line label corresponding to the maximum confidence value for each of the plurality of lane lines.

Further areas of applicability will become apparent from the description provided herein. It should be understood that the description and specific examples are intended for purposes of illustration only and are not intended to limit the scope of the present disclosure.

### DRAWINGS

The drawings described herein are for illustration purposes only and are not intended to limit the scope of the present disclosure in any way.
FIG. 1 is a schematic illustration of a vehicle utilizing a neural network system to predict lane line types proximate to the vehicle according to an embodiment of the present disclosure;
FIG. 2 is an illustration of the neural network system of FIG. 1, including a plurality of convolutional and fully connected layers for processing an image of a road surface proximate to the vehicle according to an embodiment of the present disclosure;
FIG. 3 is a table depicting a plurality of possible lane line type outputs of the neural network system according to an embodiment of the present disclosure;
FIG. 4 is an illustration of an exemplary output of the neural network system overlaid onto a daytime image of an exemplary road surface proximate the vehicle according to an embodiment of the present disclosure; and
FIG. 5 is a flow chart of a method for predicting lane line types using a neural network according to an embodiment of the present disclosure.

### DETAILED DESCRIPTION

The following description is merely exemplary in nature and is not intended to limit the present disclosure, application or uses.

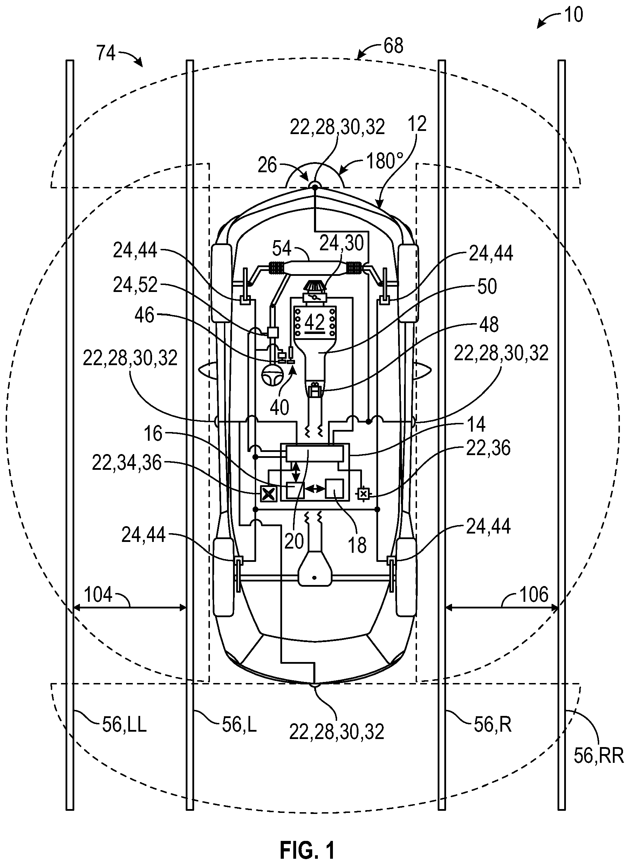

With reference to FIG. 1, a system for predicting lane lines and lane types through neural networks according to the principles of the present disclosure is shown and indicated generally by reference number 10. The system 10 operates on a vehicle 12. The vehicle 12 is illustrated as a passenger vehicle, however the vehicle 12 may be a truck, sport utility vehicle, van, motor home, or any other type of road vehicle, water vehicle, or air vehicle without departing from the scope or intent of the present disclosure. The vehicle 12 is equipped with one or more control modules 14. Each control module 14 is a non-generalized electronic control device having a preprogrammed digital computer or processor 16, memory or non-transitory computer readable medium 18 used to store data such as control logic, instructions, image data, lookup tables, and the like, and a plurality of input/output (I/O) peripherals or ports 20. The processor 16 is configured to execute the control logic or instructions. The control logic or instructions include any type of computer executable program code, including source code, object code, and executable code. The control logic also includes software programs configured to perform a specific function or set of functions. The control logic may include one or more computer programs, software components, sets of instructions, procedures, functions, objects, classes, instances, related data, or a portion thereof adapted for implementation in a suitable computer readable program code. The control logic may be stored within the memory 18 or in additional or separate memory.

The control modules 14 may have additional processors 16 or additional integrated circuits in communication with the processors 16, such as perception logic circuits for analyzing visual data, or dedicated vehicle-to-vehicle (V2V) or vehicle-to-infrastructure (V2I) circuits. Alternatively, the functions of the control module 14 may be distributed across a variety of sub-systems. The memory 18 includes media where data can be permanently stored and/or media where data can be stored and later overwritten, such as a rewritable optical disc or erasable memory device. In further examples, the memory 18 may include any of a variety of different storage media, such as flash memory, an embedded multimedia card (EMMC) flash memory, a random access memory (RAM), or the like. The I/O ports 20 receive input data from one or more sensors 22 and actuators 24 of the vehicle 12.

The sensors 22 include an optical sensing system 26 having sensors such as cameras 28, ultrasonic sensors, light detection and ranging (LiDAR) units 30, and radio detection and ranging (RADAR) units 32. The sensors 22 of the optical sensing system 26 are shown in four distinct locations in FIG. 1, however, it should be appreciated that the sensors 22 may be located at any of a variety of other locations on or off the vehicle 12 without departing from the scope or intent of the present disclosure. The sensors 22 also include movement sensors such as gyroscopic sensors 34, accelerometers 36, and the like. The actuators 24 should be understood to include any of a variety of electronic, hydraulic, and pneumatic devices capable of altering the movement of the vehicle 12. In some examples, the actuators 24 include a throttle actuator 38 of a throttle system 40 operable to alter a quantity of torque generated by a propulsion device 42 of the vehicle 12. In another example, the actuators 24 include a brake actuator 44 of a braking system 46 of the vehicle 12. The brake actuator 44 is operable to alter a quantity of deceleration applied by the braking system 46 of the vehicle 12. In further examples, the actuators 24 include a transmission ratio selector 48 of a transmission system 50, and a steering actuator 52 of a steering system 54. The transmission ratio selector 48 is operable to alter a direction and/or rate of motion of the vehicle 12. The steering actuator 52 adjusts a yaw rate of the vehicle 12.

The control module 14 communicates electronically, pneumatically, hydraulically, or the like, with a variety of on-board systems, such as the throttle system 40, the braking system 46, the transmission system 50, and the steering system 54.

In several aspects, the system 10 is trained to recognize road markings such as lane lines 56. To train the system 10, the vehicle 12 is driven in a variety of different scenarios. More specifically, in order to provide the broadest possible range of data to train the system 10, the vehicle is driven in differing weather conditions, different times of day, over different road types. Video is captured by the sensors 22 of the optical sensing system 26 during each of the variety of different scenarios. The video includes images of a predefined area around the vehicle 12. In an example, at least one forward-facing camera 28 disposed on the vehicle 12 captures optical information in the form of video in a predetermined field of view 68 in front of the vehicle 12. The predetermined field of view 68 may vary in size and shape depending on the application. In one example, the predetermined field of view 68 extends for a radius or distance in front of the vehicle 12 and in an arc of about 180°.

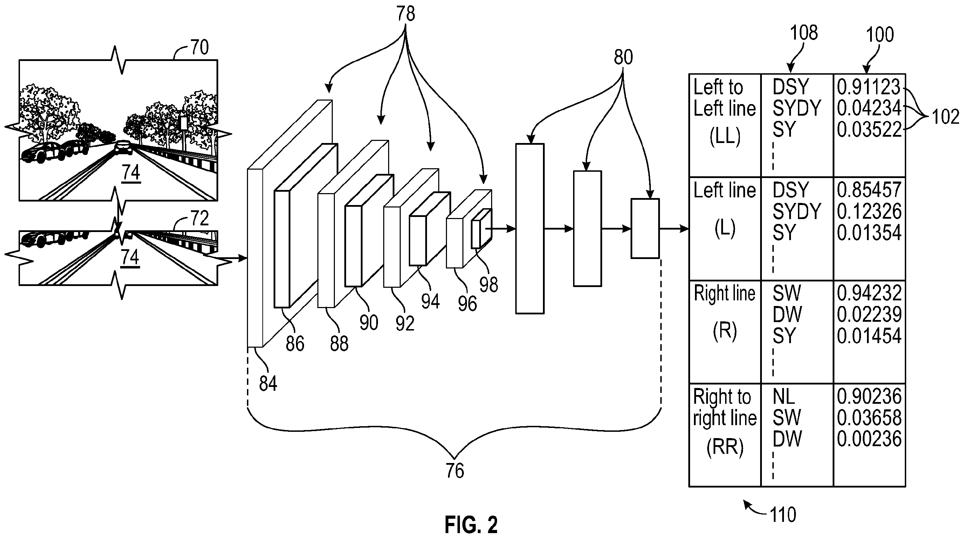

Turning now to FIG. 2, and with continuing reference to FIG. 1, the video is analyzed to detect and annotate lane lines 56 and the like. In particular, the video defines a plurality of full-size images 70. The cameras 28 send the full-size images 70 to the processor 16 of the control module 14 via the I/O ports 20, where the processor 16 executes programmatic control logic stored in the memory 18 that reduces a size of the optical information by retaining only a portion of the full-size images 70 in memory 18. Specifically, the full-size images 70 from the video are cropped to a predetermined size to increase analytic efficiency. In an example, the full-size images 70 are 320 pixels wide by 270 pixels high, and the cropped images 72 are 320 pixels wide by 110 pixels high. It should be appreciated, however, that the precise size and shape of both the full-size images 70 and the cropped images 72 may vary substantially from application to application, depending on the capabilities and requirements of the optical sensing system 26 and the processor 16. The precise size and shape of the cropped images 72 are selected to ensure that the portion of optical information that is retained in memory 18 includes a road surface 74 proximate to the vehicle 12.

The cropped images 72 are subsequently analyzed by passing the cropped images 72 through a neural network 76. The neural network 76 carries out a series of calculations and manipulations that assess the optical information in the cropped images 72 and detect locations of a plurality of lane lines 56 within the optical information. The neural network 76 includes a plurality of convolutional layers 78 and fully connected layers 80. In an example, the neural network 76 includes four convolutional layers 78 and three fully connected layers 80, however the precise quantities of convolutional and fully connected layers 78, 80 may vary from application to application. In some examples, the quantity of convolutional layers 78 has a direct relationship with the quantity of lanes on the road surface 74 as well as the quantity or number of lane types. The neural network 76 normalizes pixel values within the cropped images 72. The normalization process changes a range of pixel intensity values to bring optical data within the cropped images 72 into a range that is more easily processed by the neural network 76. In an example, if an intensity range of a given cropped image 72 is 50-180 and the desired range is 0-255, the normalization process entails subtracting a value of 50 from each pixel's intensity, making the range 0-130. Then each pixel intensity is multiplied by 255/130, making the range from 0-255 as desired. Normalization may also be nonlinear, and the precise normalization processes and algorithms may vary depending on desired intensity ranges and the like.

Once the cropped images 72 have been normalized, the cropped images 72 are passed through the four convolutional layers 78. For each of the convolutional layers 78, the cropped images 72 are further reduced in size. More specifically, the cropped images 72 pass through a first convolution and activation layer, or exponential linear unit (ELU) 84. The ELU 84 speeds up learning in deep neural networks 76 relative to rectified linear units (ReLUs), leaky ReLUs (LReLUs) and parameterized ReLUs (PRe-LUs) and the like. That is, ELUs 84 have improved learning characteristics and alleviate vanishing gradient issues. Furthermore, ELUs 84 have increased classification accuracies over other known algorithms. ELUs 84 code the degree of presence of particular phenomena in the input data. In some aspects, the ELU 84 normalizes the pixels of the cropped images 72 and a first pooling layer 86 groups together pixels in close proximity and of similar or identical intensities. In an example, the first pooling layer 86 reduces a size of the initial cropped image 72 by half to a size of approximately 160 pixels by 55 pixels.

In each subsequent convolutional layer 78, the cropped image 72 is further reduced in size as described hereinabove. In general terms, as the cropped image 72 is passed through the four convolutional layers 78, the cropped image 72 is repeatedly reduced in size by filtering the optical information from each of the four convolutional layers 78 and subsequently pooling the optical information after each size reduction. Thus, in the first ELU 84 the cropped image 72 is normalized, and the first pooling layer 86, reduces the cropped image 72 in physical size and data complexity by at least one half from 160x110 pixels to 160x55 pixels. In a second ELU 88, the 160x55 pixel image is normalized, and in the second pooling layer 90, the 160x55 pixel image is further reduced in size to 80x27 pixels. In a third ELU 92, the 80x27 image is normalized, and in the third pooling layer 94, the 80x27 pixel image is further reduced in size to 24x13 pixels. In a fourth ELU 96, the 24x13 pixel image is normalized, and in the fourth pooling layer 98 the 24x13 pixel image further reduced in size by one half.

Once the cropped image 72 has passed through all four convolutional layers 78, the cropped image 72 is passed through the three fully connected layers 80. Using the three fully connected layers 80, the control module 14 predicts a plurality of values 100 assigned to predetermined lane line types 102. In each of the fully connected layers 80 the cropped optical information is analyzed and a plurality of features within the cropped image 72 are mapped to the plurality of values 100 assigned to the predetermined lane line types 102. More specifically, as the control module 14 analyzes the optical information in the cropped image 72, the control module 14 characterizes color variations within the cropped image 72. The control module 14 identifies color and/or optical intensity variations within the cropped image 72 and characterizes the color and/or optical intensity variations as lane lines 56 according to the plurality of values 100 assigned to predetermined lane line types 102. The control module 14 predicts the plurality of values 100 by selecting at least ten values for each of the plurality of lane lines 56. Each of the ten values corresponds to one of at least ten predetermined lane line types 102.

In an example, the control module 14 assigns a "left" or "L" designation to a lane line immediately to a left of the vehicle 12. The control module 14 also assigns a "left left" or "LL" designation to a lane line 56 displaced by a first predetermined distance 104 directionally left of the lane line 56 immediately to the left of the vehicle 12. That is, the LL lane line 56 is displaced by the first predetermined distance 104 to the left of the L lane line 56 relative to the vehicle 12. The control module 14 assigns a "right" or "R" designation to a lane line 56 immediately to a right of the vehicle 12, and a "right right" or "RR" designation to a lane line 56 displaced by a second predetermined distance 106 directionally right of the R lane line relative to the vehicle 12. In some examples, the first and second predetermined distances 104, 106 are substantially equal and each defines a width of a lane on the road surface 74.

The control module 14 also determines a confidence value for each of the plurality of values 100 assigned to the predetermined lane line types 102 for each of the plurality of lane lines 56 detected within the cropped image 72. Specifically, the control module 14 determines which of the at least ten values assigned to the plurality of lane lines 56 has a highest numerical confidence value. The highest numerical confidence value indicates a highest probability that each of the lane lines 56 is a specific one of the predetermined lane line types 102. The control module 14 then extracts a lane line label 108 corresponding to the maximum confidence value for each of the plurality of lane lines 56 detected within the cropped image 72.

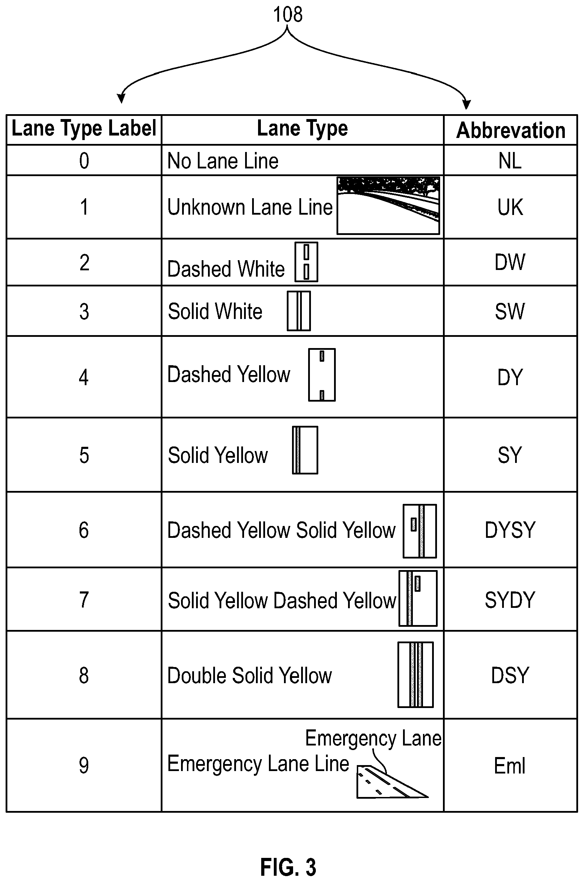

Turning now to FIG. 3, with continuing reference to FIGS. 1 and 2, in an example, the lane line labels 108 may be numerical designations used within the system 10, alphabetical abbreviations of lane line names, alphanumeric combinations, or the like. Specifically, the lane line labels 108 may include one or more of: a nonexistent lane line (NL), an unknown lane line (Unk), a dashed first color lane line, a solid first color lane line, a dashed second color lane line, a solid second color lane line, a dashed second color lane line with a solid second color lane line, a double solid second color lane line, and an emergency lane line. The first and second colors are different from each other. For example, the first color may be white while the second color is yellow, though other first and/or second colors may be used on given road surfaces 74. On some road surfaces 74 one or more of the first and second colors may be blue, red or any of a variety of other different colors without departing from the scope or intent of the present disclosure. A road surface 74 having no lane line markings at all may be scanned by the system 10 of the present disclosure and the system 10 will output a nonexistent lane line NL for the unmarked road surface 74. When a lane line 56 is found, but the lane line 56 does not correspond with a known lane line type 102, as indicated by one of the predetermined lane line labels 108, the system 10 will generate an unknown lane line Unk designation for that non-corresponding lane line 56.

Dashed lane lines often indicate areas of a road surface 74 where vehicles 12 may pass each other. In some examples, the dashed first color lane line is a dashed white lane line or "DW". Solid lane lines generally indicate areas of a road surface 74 where vehicles 12 may not legally pass each other. Accordingly, the solid first color lane line is therefore a solid white lane line or "SW". The dashed second color lane line is a dashed yellow lane line or "DY", while the solid second color lane line is a solid yellow lane line or "SY". Some road surfaces 74 are marked by combined dashed and solid lane lines running parallel to one another. The dashed and solid lane lines indicate areas of a road surface 74 where vehicles may pass one another when it is safe to do so. In some examples, the dashed second color with solid second color lane line is a dashed and solid yellow lane line or "DYSY", while a solid and dashed yellow lane line would be a "SYDY" (note that the order of the indication is reversed). Multiple parallel solid lane lines indicate areas of a road surface 74 where vehicles 12 are not legally allowed to pass one another. The double solid second color lane line would be a double solid yellow lane line or "DSY". Finally, the emergency lane line is often either the first or the second color and demarcates a proximity to an edge of the road surface 74 designated by "Eml" in the system 10.

It should be appreciated that a particular road surface 74 may include none or any number of the above-described lane lines 56 and predetermined lane line types 102, including duplicates of the lane lines 56. That is, some road surfaces 74 are unpainted or otherwise unmarked. However, the system 10 and method of the present disclosure can still determine that a nonexistent lane line NL divides or should be understood to divide the road surface 74 into multiple lanes. Similarly, other road surfaces 74 may include multiple sets of solid yellow lane lines SY, or the like.

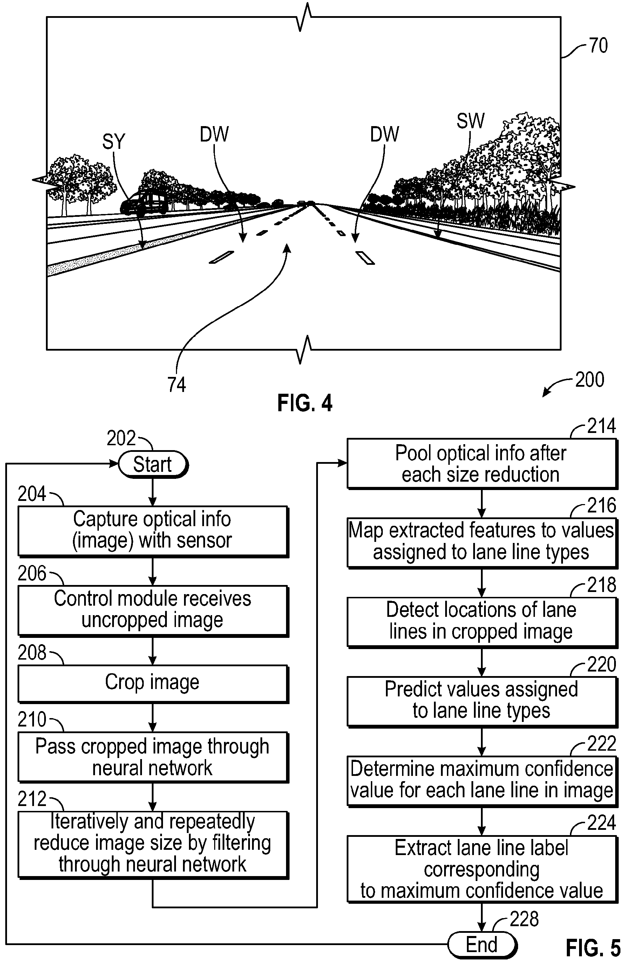

The control module 14 generates a database 110 containing the lane line labels 108 for each of the cropped images 72. The database 110 may be in the form of a spreadsheet, a text file, or any other file which may be ready by either or both of a computer (such as the control module 14), or a human. In an example, the database 110 defines a spreadsheet in which one column contains input image file names for each of the cropped image 72 frames from the video. Data in each of at least four other columns corresponds to label codes for position on the road surface 74 for a given lane line 56. For example, one column may include "left" labels, another may include "right" labels, and third and fourth columns may include "left left" and "right right" labels, respectively. The annotated information in the spreadsheet is then used to train the neural network 76. A visual representation of the output of the lane line type data for an exemplary full-size image 70 is depicted generally in FIG. 4 where the system 10 has identified a solid yellow (SY) lane line 56 in the "LL" position, a dashed white (DW) lane line 56 in the "L" position, a dashed white (DW) lane line 56 in the "R" position, and a solid white (SW) lane line 56 in the "RR" position.

Turning now to FIG. 5 and with continuing reference to FIGS. 1-4, a flowchart of a method of predicting lane line 56 types using neural networks is shown and indicated generally by reference number 200. The method 200 begins at block 202. At block 204 the control module 14 executes a control logic that captures optical information in a predetermined field of view in front of the vehicle with at least one forward-facing optical sensor or camera 28 disposed on the vehicle 12.

At block 206, the control module 14 executes programmatic control logic to receive the optical information or image from the at least one forward-facing camera 28 in an uncropped form. At block 208, the control module 14 crops the image to a predetermined size. The predetermined size is achieved by retaining only the portion of the image including a road surface 74. In some examples, the portion of the image including the road surface 74 is approximately the bottom quarter to the bottom one half of the uncropped image.

At block 210, the control module 14 executes a control logic that passes the cropped image through a neural network including, for example, four convolutional layers 78 and three fully connected layers 80. At block 212, the control module 14 executes a control logic that iteratively and repeatedly reduces the size of the cropped image by filtering the image in each of the four convolutional layers 78. At block 214, the control module 14 executes a control logic that pools the optical information after each successive size reduction of the cropped image. At block 216, the control module 14 executes a control logic that maps extracted features, such as lane lines 56, to a plurality of values assigned to predetermined lane line types in each of the three fully connected layers 80. At block 218, the control module 14 executes a control logic that assesses the cropped image to detect the locations of a plurality of lane lines 56 in the cropped image. At block 220, the control module 14 executes a further control logic that predicts a plurality of values assigned to predetermined lane line types 102 of the plurality of lane lines 56. At block 222, the control module 14 executes a control logic that determines a maximum confidence value for each of the plurality of values assigned to the predetermined lane line types 102 for each of the lane lines 56 detected. At block 224, the control module 14 executes a control logic that extracts a lane line label corresponding to the maximum confidence value for each of the lane lines 56 detected within the cropped image. At block 226, the method 200 ends and returns to block 202 where the method 200 runs continuously while the system 10 is operating.

A system and method for predicting lane line types with neural networks offers several advantages. These include the ability to utilize preexisting infrastructure to perform image analyses that overcome optical interference caused by weather, debris, and the like. Moreover, the system and method of the present disclosure can mimic and improve upon a human driver's ability to determine the positions and types of lane lines 56 on a road surface 74. The system and method further provide robust predictions of both lane lines and lane types even when the road surface is obscured by weather, debris, and the like.

The description of the present disclosure is merely exemplary in nature and variations that do not depart form the gist of the present disclosure are intended to be within the scope of the present disclosure. Such variations are not to be regarded as a departure from the spirit and scope of the present disclosure.

## Claims

1. A method of predicting lane line types with neural networks, the method comprising:
capturing optical information with one or more optical sensors disposed on a vehicle;
cropping the optical information to a predetermined size;
passing cropped optical information through a neural network;
assessing the optical information to detect locations of a plurality of lane lines in the optical information;
predicting a plurality of values assigned to predetermined lane line types of the plurality of lane lines;
determining a maximum confidence value for each of the plurality of values assigned to the predetermined lane line types for each of the plurality of lane lines; and
extracting a lane line label corresponding to the maximum confidence value for each of the plurality of lane lines.

2. The method of claim 1 wherein capturing optical information further comprises: utilizing at least one forward-facing camera disposed on the vehicle to capture the optical information in a predetermined field of view in front of the vehicle.

3. The method of claim 1 wherein cropping the optical information further comprises:
receiving uncropped optical information from the one or more optical sensors; and
reducing a size of the optical information by cropping the optical information to retain only a portion of the optical information containing a road surface.

4. The method of claim 1 wherein passing cropped optical information through a neural network further comprises:
normalizing pixel values within the cropped optical information;
passing the cropped optical information through four convolutional layers; and
passing the cropped optical information through three fully connected layers.

5. The method of claim 4 wherein passing the cropped optical information through four convolutional layers further comprises:
repeatedly reducing a size of the cropped optical information by filtering the optical information in each of the four convolutional layers; and
pooling the optical information after each recursive size reduction of the cropped optical information.

6. The method of claim 5 wherein passing the cropped optical information through three fully connected layers further comprises:
mapping extracted features of the cropped optical information to the plurality of values assigned to predetermined lane line types.

7. The method of claim 1 wherein assessing the optical information to detect locations of a plurality of lane lines in the optical information further comprises:
assigning a left designation to a lane line immediately to a left of the vehicle;
assigning a left-left designation to a lane line displaced by a first predetermined distance directionally left of the lane line immediately to the left of the vehicle;
assigning a right designation to a lane line immediately to a right of the vehicle;
assigning a right-right designation to a lane line displaced by a second predetermined distance directionally right of the lane line immediately to the right of the vehicle; and
wherein the first and second predetermined distances are substantially equal and each defines a width of a lane.

8. The method of claim 1 wherein predicting a plurality of values assigned to predetermined lane line types of the plurality of lane lines further comprises:
predicting at least ten values for each of the plurality of lane lines, wherein the ten values correspond to at least ten predetermined lane line types.

9. The method of claim 8 wherein determining a maximum confidence value for each of the plurality of values assigned to the predetermined lane line types for each of the plurality of lane lines further comprises:
determining which of the at least ten values assigned to the plurality of lane lines has a highest numerical confidence value, wherein the highest numerical confidence value is a highest probability of each of the lane lines being a specific one of the predetermined lane line types.

10. The method of claim 9 wherein extracting a lane line label corresponding to the maximum confidence value for each of the plurality of lane lines further comprises:
assigning a lane line label to each of the plurality of lane lines, the lane line labels comprising one or more of:
a nonexistent lane line;
an unknown lane line;
a dashed first color lane line;
a solid first color lane line;
a dashed second color lane line;
a solid second color lane line;
a dashed second color and solid second color lane line;
a solid second color and dashed second color lane line;
a double solid second color lane line; and
an emergency lane line; and
wherein the second color is different from the first color.

11. A system for predicting lane line types with neural networks, the system comprising:
a vehicle having at least one forward-facing camera disposed on the vehicle, the at least one forward-facing camera capturing optical information in a predetermined field of view in front of the vehicle;
a control module disposed within the vehicle and having a processor, a memory, and one or more input/output (I/O) ports; the I/O ports receiving input data from the at least one forward-facing camera; the processor executing programmatic control logic stored within the memory, the programmatic control logic comprising:
a first control logic receiving uncropped optical information from the one or more optical sensors;
a second control logic cropping the optical information to a predetermined size by reducing a size of the optical information through retaining only a portion of the optical information containing a road surface;
a third control logic passing cropped optical information through a neural network including four convolutional layers and three fully connected layers;
a fourth control logic repeatedly reducing a size of the cropped optical information by filtering the optical information in each of the four convolutional layers;
a fifth control logic pooling the optical information after each successive size reduction of the cropped optical information;
a sixth control logic mapping extracted features of the cropped optical information to a plurality of values assigned to predetermined lane line types in each of the three fully connected layers;
a seventh control logic assessing the optical information to detect locations of a plurality of lane lines in the optical information;
an eighth control logic predicting a plurality of values assigned to predetermined lane line types of the plurality of lane lines;
a ninth control logic determining a maximum confidence value for each of the plurality of values assigned to the predetermined lane line types for each of the plurality of lane lines; and
a tenth control logic extracting a lane line label corresponding to the maximum confidence value for each of the plurality of lane lines.
